# EUROPÄISCHE PATENTSCHRIFT

(11) **EP 0 732 654 B1**
(45) Veröffentlichungstag und Bekanntmachung des Hinweises auf die Patenterteilung: **04.07.2001**
(21) Anmeldenummer: 96103721.5
(22) Anmeldetag: 09.03.1996
(51) Int. Cl.: G06F 11/20

(54) **Verfahren zur fehlertoleranten Kommunikation unter hohen Echtzeitbedingungen**
Method for fault-tolerant communication under real-time conditions
Procédé pour la communication tolérante des fautes sous conditions en temps réel

(30) Priorität: 16.03.1995 DE 19509558
(43) Veröffentlichungstag der Anmeldung: 18.09.1996
(73) Patentinhaber: ABB PATENT GmbH, 68309 Mannheim (DE)
(72) Erfinder: Dittmar, Ewald, 67071 Ludwigshafen (DE); Kochs, Hans Dieter, Prof. Dr., 47259 Duisburg (DE); Hilmer, Holger, 47445 Mörs (DE)
(74) Vertreter: Rupprecht, Klaus, Dipl.-Ing.

(56) Entgegenhaltungen:
- EP-A- 0 541 508
- WO-A-88/01410
- WO-A-90/09631
- US-A- 5 329 521

## Beschreibung

Die Erfindung bezieht sich auf ein Verfahren zur zuverlässigen, fehlertoleranten Datenübertragung unter hohen zeitlichen Anforderungen in einem lokalen Netzwerk nach dem Oberbegriff des Anspruchs 1. Das Einsatzgebiet eines Systems auf der Basis des erfindungsgemäßen Verfahrens liegt im Bereich prozeßnaher verteilter Leit- und Automatisierungssysteme, die hohe Zuverlässigkeitsanforderungen erfüllen müssen.

In der WO 90/09631 wird ein Verfahren zur Überwachung eines Computer-Netzwerks mit mindestens zwei über einen Datenbus verbundenen Teilnehmern vorgeschlagen. Das Verfahren zeichnet sich dadurch aus, daß die Funktion des Datenbusses und/oder die Funktion der Teilnehmer mit Hilfe von Fehlererkennungssignalen mindesten einen Teilnehmer überwacht und daß auf den jeweiligen Fehlerfall abgestimmte Notlauf-Maßnahmen zur Einstellung von definierten Notlauf-Betriebsarten ergriffen werden. Nach Ergreifung der ersten Notlauf-Maßnahme wird geprüft, ob das Computer-Netzwerk fehlerfrei funktioniert. Wenn dies der Fall ist, wird die erste Notlauf-Maßnahme aufrechterhalten und auch damit die erreichte Notlauf-Betriebsart. Sollten nach Ergreifen der ersten Notlauf-Maßnahme weitere Fehler im Computer-Netzwerk auftauchen, wird die erste Notlauf-Maßnahme zurückgenommen und die zweite Notlauf-Maßnahme ergriffen. Wenn nunmehr keine weiteren Fehler auftauchen wird der durch diese Maßnahme eingestellte Notlauf-Betrieb, der Sonder-Notlauf, aufrechterhalten. Erst wenn immer noch weitere Fehler auftauchen werden die betroffenen Teilnehmer oder das gesamte Computer-Netzwerk abgeschaltet.

Heutige Konzepte verteilter Leitsysteme erfüllen die Anforderungen nach hoher Zuverlässigkeit und hartem Echtzeitverhalten nicht gleichermaßen. So sind hochzuverlässige Systeme meist auf die Merkmale höherer Ebenen der Automatisierungshierarchie zugeschnitten. Die Kommunikation in diesen Ebenen ist durch große zu übertragende Datenmengen, mittelmäßig hohe zeitliche Anforderungen an die Datenübertragung und eine relativ geringe Anzahl von Kommunikationsteilnehmern (Netzknoten) gekennzeichnet. Das in diesem Bereich häufig eingesetzte Kommunikationsprotokoll TCP/IP ist aufgrund hohen Overheads und des verbindungsorientierten Übertragungsprinzips nicht in der Lage kleine Datenmengen, die in prozeßnahen Systemen überwiegen, effektiv zu übertragen. Zudem sind die verwendeten Buszugriffsverfahren - z.B. CSMA/CD oder Token Bus - entweder nicht deterministisch oder nur in Netzen mit einer geringen Knotenanzahl anwendbar. Konzepte zur Implementierung von Fehlertoleranz zur Gewährleistung hoher Zuverlässigkeit und Verfügbarkeit haben meist erhöhte Transaktionszeiten zur Folge, die in zeitkritischen Systemen nicht toleriert werden können.

Demgegenüber stehen Protokolle aus dem Feld- und Sensor/Aktor-Bus-Bereich, die für den Einsatz in zeitkritischen, prozeßnahen Systemen optimiert sind. Sie ermöglichen kurze Transaktionszeiten für die Übertragung geringer Informationsmengen und basieren auf deterministischen Buszugriffsverfahren.

Nachteil dieser Protokolle sind die für hochzuverlässige Systeme nicht ausreichend unterstützten Mechanismen zur Tolerierung von Fehlern und zur Sicherung der systemweiten Datenkonsistenz. Insbesondere wird in den meisten Fällen keine zuverlässige - d.h. bestätigte - Broadcast-Übertragung unterstützt. Als Beispiel sei hier das FIP (Factory Instrumentation Protocol) genannt. FIP ermöglicht einen bestätigten Nachrichtenaustausch zweier Kommunikationsteilnehmer über eine logische Punkt-zu-Punkt-Verbindung, der Transfer einer Nachricht an mehrere Empfänger gleichzeitig (Broadcast) erfolgt aber ohne Quittierung des ordnungsgemäßen Empfangs. Somit ist eine bestätigte Broadcast-Kommunikation nur durch mehrere sequentielle Punkt-zu-Punkt-Übertragungen zu realisieren. Die dabei auftretenden großen Tansaktionszeiten sind in zeitkritischen Systemen -- insbesondere in Netzen mit einer hohen Teilnehmer-(Empfänger-)Anzahl -- unzulässig.

Weiterhin werden redundant ausgeführte Busse von vielen Feldbus-Protokollen nicht unterstützt und erfordern zusätzliche Maßnahmen, die wiederum negative Auswirkungen auf das Zeitverhalten und die Datenkonsistenz haben.

Zusammenfassend lassen sich die Anforderungen und die sich daraus ableitenden Systemmerkmale an das erfindungsgemäße Verfahren wie folgt gliedern:
- hohe Zuverlässigkeit und Verfügbarkeit
   - Gewährleistung der systemweiten Datenkonsistenz (auch im Fehlerfall)
   - Implementierung von Fehlertoleranz
- hartes Echtzeitverhalten
   - deterministisches Zugriffsverfahren
   - kurze Transaktionszeiten

Die Erfüllung der genannten Anforderungen erfolgt unter Berücksichtigung des für prozeßnahe Kommunikation typischen Nachrichtenaufkommens: häufig, überwiegend ereignisorientierte also nicht zyklisch auftretende - Nachrichten mit kurzer Informationslänge. Weiterhin soll die Möglichkeit bestehen eine große Anzahl von Knoten (≈ 100) an das System anzuschalten.

Systeme hoher Zuverlässigkeit und Verfügbarkeit müssen fehlertolerantes Verhalten aufweisen. Das heißt, die Gesamtsystemfunktion ist trotz fehlerhafter Systemkomponenten aufrecht zu erhalten. Verteilte Systeme sind durch die Vervielfachung und Verteilung von Informationen auf örtlich getrennte Funktionsmodule gekennzeichnet. Vervielfachung und Verteilung müssen konsistent erfolgen, d.h. eine Quellinformation muß bei allen Empfängern innerhalb einer bestimmten Zeit in identischem Zustand vorliegen.
Im Zusammenhang mit Konsistenz bedeutet Fehlertoleranz: die Konsistenz der verteilten Datenbestände ist selbst bei Auftreten eines Fehlers zu wahren bzw. wiederherzustellen bevor eine Fehlerausbreitung zu schwerwiegenden Fehlfunktionen des Gesamtsystems führt. Die Realisierung von Fehlertoleranz erfolgt mittels redundanter Auslegung von Systemkomponenten. So kann in einem verteilten System der Ausfall einer Busleitung nur durch Umschalten auf ein redundantes Bussystem toleriert werden. Der Umschaltvorgang muß mit möglichst geringer zeitlicher Unterbrechung der Systemfunktion erfolgen, so daß die Zeitschranken innerhalb des Systems nicht verletzt werden. Zudem darf die Konsistenz der Datenbestände nicht beeinträchtigt werden, d.h. die Umschaltung muß ohne Verlust, Verfälschung und Verdopplung von Informationen ablaufen. Diese Vorgaben setzen eine sehr schnelle Fehlererkennung, auch Fehlerlatenz genannt, sowie einen hohen Fehlerüberdeckungsgrad voraus. Weiterhin erfordert Redundanz die weitgehende Entkopplung redundanter Komponenten um eine Fehlerausbreitung auf beide Systeme zu verhindern.

Die Zuverlässigkeit eines verteilten Systems wird maßgeblich durch das Übertragungsprinzip des Kommunikationsprotokolls bestimmt. Zuverlässigkeit und Konsistenz der Daten sind nur durch wirksame Bestätigungsmechanismen zu erreichen. Das bedeutet, die Empfänger einer Nachricht müssen den ordnungsgemäßen Erhalt durch eine Rückmeldung an den Sender quittieren. Dabei nimmt der Grad der Zuverlässigkeit mit der Anzahl der bestätigenden Empfänger zu. Die größtmögliche Zuverlässigkeit der Datenübertragung erreicht man mit dem Atomic-Broadcast-Prinzip: Eine Nachricht wird entweder von allen funktionsfähigen Netzteilnehmern korrekt empfangen oder sie wird von keinem empfangen. Dieses Prinzip kann durch Übertragungskonzepte wie das 2-Phase-Repeat-Verfahren verwirklicht werden, die mehrphasige Bestätigungszyklen verwenden:
1. Ein Sender verschickt eine Nachricht an alle Teilnehmer seiner Zielgruppe.
2. Jeder Empfänger bestätigt den korrekten Empfang der Daten durch Senden einer Quittungsnachricht.
3. Der Sender erwartet die Quittungen innerhalb einer maximalen Zeitspanne (Time Out).
4.
   - Treffen die Quittungen innerhalb des Time Out ein, sendet der Sender eine Freigabenachricht und gibt somit die Bearbeitung in den Empfängern frei.
   - Andernfalls wiederholt der Sender die Übertragung seiner Nachricht.

Mehrphasige Konzepte weisen einen sehr hohen Kommunikationsaufwand auf, der zu langen Transaktionszeiten und hoher Busbelastung führt. Somit sind sie für harte Echtzeitsysteme ungeeignet. An diesem Beispiel zeigt sich, daß Maßnahmen zur Erhöhung der Zuverlässigkeit meist negativen Einfluß auf das Zeitverhalten des Systems haben, und umgekehrt. Daher sind die Eigenschaften Zuverlässigkeit und hartes Echtzeitverhalten schwer zu vereinen.

Der Erfindung liegt die Aufgabe zugrunde, ein Verfahren zur Datenübertragung in einem lokalen Netzwerk anzugeben, das sowohl hohen Zuverlässigkeitsanforderungen, als auch hohen Echtzeitanforderungen genügt.

Diese Aufgabe wird bei einem Verfahren nach dem Oberbegriff des Anspruchs 1 durch dessen kennzeichnende Merkmale gelöst. Vorteilhafte Ausgestaltungen sind den weiteren Ansprüchen und der nachstehenden Beschreibung zu entnehmen.

Das erfindungsgemäße Verfahren verwendet eine Doppelbusarchitektur. Die redundante Busauslegung dient zum einen der Erhöhung der Systemverfügbarkeit, wobei im Fehlerfall auf den zweiten Bus umgeschaltet wird; zum anderen wird ein aktiver Fehlererkennungs- und Benachrichtigungsmechanismus implementiert. Dieser Mechanismus sieht die Erkennung von Knotenfehlern durch Watchdog-Prozessoren und die Fehlerbenachrichtigung aller Netzteilnehmer über das zweite Bussystem vor. Damit ist eine schnelle Erkennung und Behandlung von Komponentenausfällen und somit eine konsistente Redundanzumschaltung - d.h. ohne Verlust, Verfälschung und Verdopplung von Nachrichten möglich. Beide Bussysteme verwenden vorzugsweise das Busprotokoll CAN, da dieses günstige Eigenschaften zur Realisierung des erfindungsgemäßen Verfahrens hat.

CAN, ursprünglich für den Einsatz als Sensor/Aktor-Bus im Kraftfahrzeug entwickelt, ist aufgrund seiner Flexibilität für weite
Bereiche der Automatisierungstechnik geeignet. Vor allem die Verwirklichung eines hochzuverlässigen und effektiven Atomic-Multicast-Übertragungsprinzips sowie die Mechanismen zur Fehlererkennung und Fehlertoleranz machen CAN zu einer Basis für hochzuverlässige Echtzeitsysteme.

Der Datentransfer in einem CAN-Netz läuft wie folgt ab:
1. Ein Knoten (Sender) versendet eine Nachricht im Broadcast
2. Entdeckt ein beliebiger Knoten einen Übertragungsfehler, zerstört er die Nachricht noch während der Übertragung durch überschreiben des Buspegels mit einem Fehlerframe.
3. Alle Knoten verwerfen die zerstörte Nachricht.
4. Der Sender startet eine Neuübertragung.

Es ist ein negativer Bestätigungsmechanismus realisiert, d.h. der Sender einer Nachricht betrachtet seine Sendung als von allen Netzteilnehmern korrekt empfangen, solange kein Knoten die Nachricht durch überschreiben zerstört. Diese Vorgehensweise sichert die systemweite Konsistenz der Daten, da eine Nachricht entweder von allen Knoten korrekt empfangen wird, oder von keinem; dies entspricht dem Prinzip des Atomic-Broadcast.

Im fehlerfreien Fall erfordert die Ausführung einer Transaktion (Senden einer Information und Quittierung durch die Empfänger) das Senden nur einer Nachricht. Damit ist CAN wesentlich effizienter (kurze Transaktionszeiten, geringe Busbelastung) als andere Atomic-Broadcast-Protokolle, die mehrphasige positive Bestätigungsmechanismen verwenden (s.o.).

Jeder CAN-Knoten verwaltet interne Empfangs- und Sendefehlerzähler,
die nach Erkennen eines Übertragungsfehlers inkrementiert und nach jeder fehlerfreien Übertragung dekrementiert werden. Erreicht ein Fehlerzähler den Wert 127 geht der CAN-Baustein selbständig vom error active in den error passive-Zustand über, d.h. er darf zwar weiterhin Nachrichten versenden und empfangen, aber keine fehlerhafte Nachricht durch Senden eines Fehlerframe zerstören. Ein CAN-Controller, dessen Fehlerzähler den Wert 256 erreicht, schaltet sich in den Zustand bus off, d.h. er nimmt in keiner Weise mehr am Busverkehr teil. Das bedeutet, daß ein fehlerhafter Knoten den Busverkehr solange durch Senden von Fehlerframes stört bis er in den passiven Zustand übergeht.

Ein verteiltes System, das allein die vom CAN-Protokoll bereitgestellten Mechanismen verwendet, weist im Hinblick auf die erläuterten Anforderungen bezüglich hoher Zuverlässigkeit und Fehlertoleranz einige Nachteile auf. Die Behebung dieser Nachteile ist die-Motivation für das erfindungsgemäße Verfahren.

Die Einschränkungen von CAN sind:
1. Das Management von Redundanz ist im CAN-Protokoll nicht vorgesehen.
2. Bei Ausfall einer Systemkomponente treten unter Umständen hohe Fehlerlatenzen auf.

Zu 1.): Die redundante Ausführung von Systemkomponenten, insbesondere der Busleitung zur Tolerierung von Busfehlern, erfordert zusätzliche Mechanismen zur konsistenten Redundanz-Umschaltung im Fehlerfall. So sind Maßnahmen zur Fehlererkennung, Fehlerlokalisierung und Steuerung des Umschaltvorgangs zu implementieren. Ein wichtiger Gesichtspunkt ist die eindeutige Festlegung von Umschaltkriterien, d.h. Systemzuständen, die eine Umschaltung auslösen.

Zu 2.): Der negative Bestätigungsmechanismus von CAN weist einen Nachteil auf: Der Sender einer Nachricht erkennt den Ausfall eines anderen Netzteilnehmers nicht, vielmehr geht er davon aus, daß bei Ausbleiben von Fehlerframes alle Empfänger seine Nachricht fehlerfrei erhalten haben. Man versucht dies durch sogenannte Life Guarding-Verfahren zu beheben. Unter Life Guarding versteht man das zyklische Senden von Lebensnachrichten durch aller Netzknoten. Bleibt die Lebensnachricht eines Teilnehmers aus, so weist dies auf einen Komponentenfehler innerhalb dieses Knotens hin. Abhängig von der Zykluszeit der Lebensnachrichten kann eine unzulässig hohe Zeit bis zum Erkennen des Knotenausfalls vergehen, so daß ein Verlust von Nachrichten auftritt, der zu Inkonsistenzen führt. Vor allem bei einer großen Anzahl angeschalteter Knoten sind die Fehlerlatenzen zu hoch. Zudem erhöht der Life Guarding-Verkehr die Busbelastung, so daß die Zugriffszeiten für andere Nachrichten ggf. zu groß werden und die Zeitschranken nicht eingehalten werden können. Das erfindungsgemäße Verfahren vermeidet diese Probleme durch einen aktiven Fehlererkennungs- und -benachrichtigungs-Mechanismus. Dabei wird jeder Knoten durch einen Watchdog-Prozessor überwacht; die Fehlerbenachrichtigung der anderen Netzteilnehmer erfolgt sofort über ein zweites Bussystem.

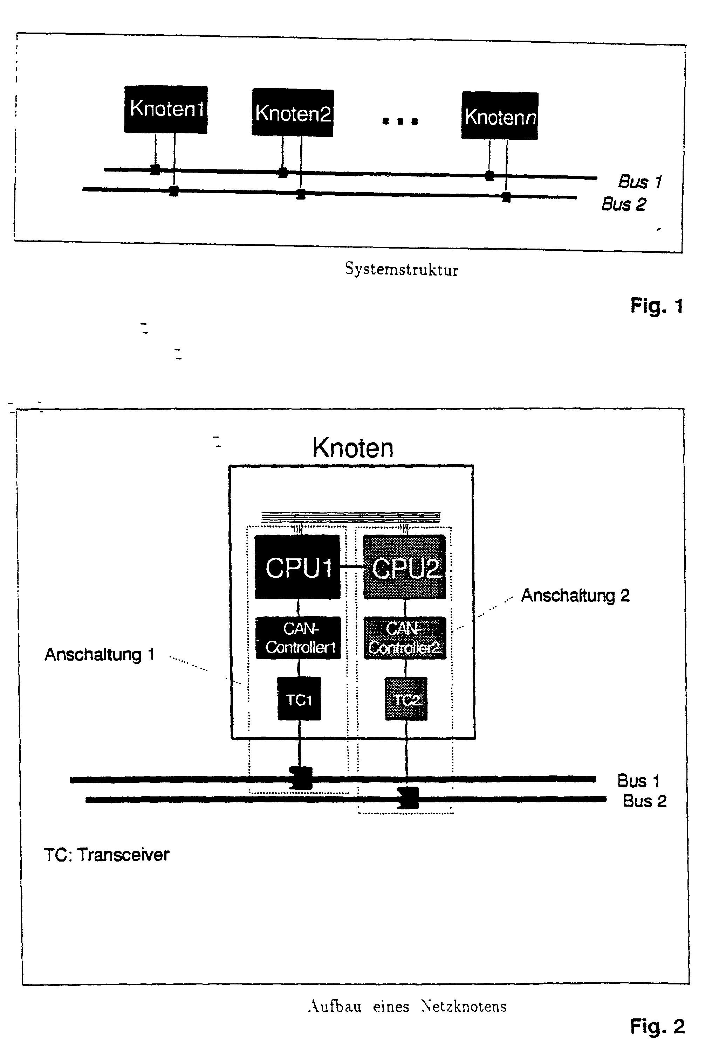

Ein System, basierend auf dem erfindungsgemäßen Verfahren besteht aus einer Reihe von Busstationen (Knoten), die gemäß Fig. 1 mittels zwei serieller Bussysteme miteinander gekoppelt sind. Jeder Knoten ist durch zwei getrennte Ankopplungen mit den beiden Bussen verbunden, wie in Fig. 2 dargestellt ist. Eine Ankopplung setzt sich mindestens aus einem CAN-Kommunikations-Controller, einer Kommunikations-CPU und einem Transceiver TC zusammen. Der CAN-Controller führt alle im CAN-Protokoll festgelegten Mechanismen aus. Dazu gehören nach CAN-Spezifikation 2.0:
- Nachrichtenfilterung
- Paketaufbau
- Buszugriffssteuerung
- Fehlererkennung
- Fehlersignalisierung
- Nachrichten-Bestätigung
- Synchronisation

Der Transceiver vollzieht die physikalische Ankopplung des Knotens an das Übertragungsmedium; die Parameter für eine elektrische Ankopplung sind festgelegt in ISO/DIS 11898 Road vehicles - Interchange of digital information - Controller area network (CAN) for high-speed communication. Als Kommunikations-CPU wird ein Mikrocontroller eingesetzt; er leitet Datenübertragungen ein, selektiert empfangene Daten und leitet sie zur Verarbeitung weiter. Zudem werden die, gemäß dem erfindungsgemäßen Verfahren implementierten Mechanismen zum Redundanz-Management sowie zur Fehlersteuerung (Watchdog-Mechanismen, Fehlerbenachrichtigung ...) von der Kommunikations-CPU ausgeführt.

Als Bustopologie kann eine Busstruktur oder eine Sternstruktur eingesetzt werden. Es sind sowohl elektrische Übertragungsmedien wie Twisted Pair und Koaxialkabel, als auch Lichtwellenleiter verwendbar. Die Wahl von Topologie und Übertragungsmedium muß unter Beachtung der vom CAN-Protokoll auferlegten Restriktionen bz-gl. Knotenanzahl, maximaler Datenrate und Buslänge erfolgen.

Der knoteninterne Informationsaustausch zwischen den Kommunikations-CPU's erfolgt über einen Parallelbus. Optional kann eine zusätzliche serielle Verbindung eingesetzt werden. Die genannten Komponenten dienen zur Steuerung der Netzkommunikation; weitere Verarbeitungseinheiten werden über den Parallelbus mit dem System verbunden.

Das erfindungsgemäße Verfahren umfaßt Mechanismen zum Management von Systemfehlern. Zum Verständnis der Funktionsweise werden im folgenden mögliche Fehlersituationen in einem lokalen Netzwerk aufgezeigt.

Fehler- bzw. Ausfallsituationen von Kommunikationskomponenten lassen sich in zwei Kategorien einteilen:
- Globale Fehler unterbinden die Kommunikation aller Netzteilnehmer und zerstören somit die Gesamtsystemfunktion. Globale Fehler können einerseits direkt durch Leitungsdefekte und indirekt durch busblockierende Fehler der angeschalteten Komponenten auftreten. Unter Leitungsfehlern versteht man Kurzschlüsse und Unterbrechungen der Busleitung. Busblockierende Komponentenfehler können Kurzschlüsse an den busseitigen Ausgängen von CAN-Controller und Transceiver sein. Diese Fehler führen zu einer dauerhaften Blockierung des Busses durch Erzeugen eines permanenten Spannungspegels. Weiterhin kann der Bus durch Dauersenden einer hochprioren Nachricht für andere Nachrichten versperrt werden. Globale Fehler können durch Umschalten auf ein redundantes Bussystem toleriert werden.
- Lokale Fehler schließen einen Knoten von der systemweiten Kommunikation aus und führen zu einer, abhängig von der Funktion des fehlerhaften Teilnehmers, mehr oder weniger großen Beeinträchtigung der Gesamtsystemfunktion. Unter lokale Fehler faßt man alle Ausfälle von CAN-Controllern, CPU's und Transceivern zusammen, die diese Komponenten außer Funktion setzen aber den Datenverkehr der übrigen Busteilnehmer nicht gefährden. Darunter fallen z.B. Leitungsunterbrechungen zwischen CAN-Baustein und Transceiver sowie zwischen Transceiver und Busleitung. Außerdem zählen interne Bausteinfehler dazu, die zum Verlust oder zur Verfälschung von Daten führen. Lokale Fehler können durch redundante Auslegung der Komponenten toleriert werden.

Im folgenden wird zwischen Fehlerfall und Normalbetrieb unterschieden. Unter Normalbetrieb sei der fehlerfreie Betriebszustand verstanden eingeschlossen sind transiente Übertragungs- und Komponentenfehler, die durch die Fehlermechanismen des CAN-Protokolls toleriert werden.

Ein verteiltes System auf der Basis des erfindungsgemäßen Verfahrens toleriert sowohl globale als auch lokale Fehler im Bereich der Kommunikationskomponenten. Erreicht wird dies durch eine Doppelbusstruktur sowie die redundante Ausführung der Anschaltkomponenten Kommunikations-CPU, CAN-Controller und Transceiver.
Ein besonderer Vorteil ist die Möglichkeit der Redundanzumschaltung unter Wahrung der Konsistenz der verteilten Datenbestände. Damit werden aufwendige Recovery-Maßnahmen zur Wiederherstellung eines korrekten Systemzustandes nach Auftreten eines Fehlers weitgehend vermieden. Basis des erfindungsgemäßen Verfahrens ist ein aktiver Fehlererkennungs- und -signalisierungs-Mechanismus, der im folgenden anhand von Beispielen erläutert wird.

Im Normalbetrieb läuft der gesamte Prozeßdatenverkehr über ein Bussystem (hier Bus 1; siehe Fig. 2) ab. Unter Bussystem sei eine Busleitung sowie die zugehörigen Anschaltkomponenten CPU's, CAN-Controller und Transceiver gemeint. Bussystem 2 dient im Normalbetrieb allein der Übertragung von Statusmeldungen seiner Komponenten und sonstiger Nachrichten. Die Kommunikations-CPU einer Anschaltbaugruppe 2 überwacht die Funktionsfähigkeit der seinem Knoten zugehörigen Anschaltbaugruppe 1 und erfüllt somit die Funktion eines Watchdog-Prozessors. Gleichermaßen findet eine Überwachung von Anschaltung 2 durch CPU 1 statt. Tritt in Bussystem 1 ein Fehler auf, informiert der fehlererkennende Watchdog-Prozessor die übrigen Netzteilnehmer durch Senden einer Fehlermeldung über Bussystem 2, das damit die Funktion eines Watchdog-Busses erfüllt. Die Fehlernachricht fordert alle Netzknoten - ggf. nach weiteren Systemchecks - auf das Bussystem 1 zu sperren und den Prozeßdatenverkehr nun über Bus 2 abzuwickeln.

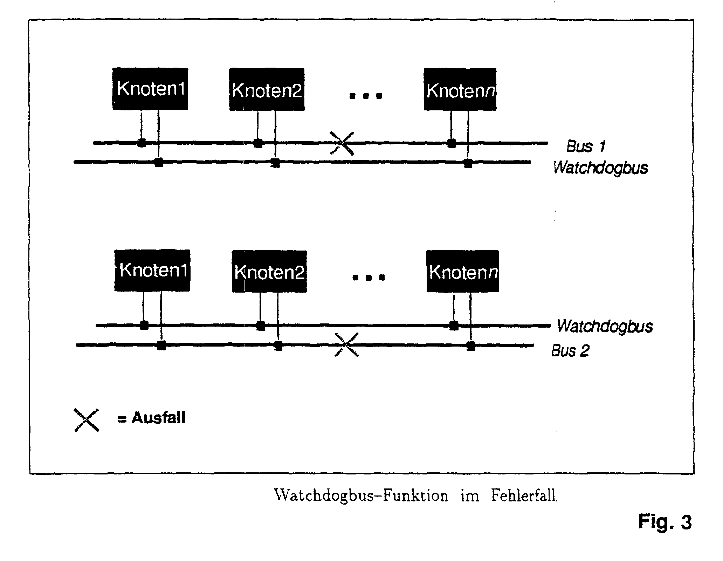

Erkennt eine CPU 1 einen Fehler in Bussystem 2, findet eine Fehlermitteilung über Bussystem 1 statt, die aber nicht zur Busumschaltung führt, da der Prozeßdatenverkehr nicht betroffen ist. Beide Bussysteme dienen also bei Erkennen eines Fehlers im jeweils anderen System als Watchdogbus (vergl. Fig. 3).

Gemäß den beschriebenen Abläufen erfüllt eine Kommunikations-CPU fünf Aufgaben:
- Steuerung der Kommunikation im Normalbetrieb
- Funktionsüberwachung der Anschaltbaugruppe des anderen Bussystems innerhalb des Knotens
- Funktionsüberwachung der eigenen Anschaltkomponenten
- Steuerung der Übertragung von Fehlermitteilungen nach Erkennen eines Fehlers im anderen Bussystem
- Koordinierung des Umschaltvorgangs

Die Fehlererkennungs- und -signalisierungs-Vorgänge unterscheiden sich abhängig davon, ob einerseits ein CPU-Ausfall oder andererseits ein CAN-Controller-, Transceiver- oder Leitungsfehler vorliegt. Die Systemreaktionen beider Fehlersituationen werden im folgenden erklärt.

Ein Leitungsfehler sowie Fehlfunktionen von CAN-Controllern oder Transceivern wirken sich meist als Verfälschung von Busnachrichten aus und werden durch die Fehlererkennungsmechanismen des CAN-Protokolls, also in den CAN-Bausteinen, entdeckt. Ein CAN-Controller, der einen solchen Fehler entdeckt, zerstört die fehlerhafte Nachricht noch während deren Übertragung durch Senden eines Fehlerframes (s.o.). Gleichzeitig werden die Fehlerzähler aller Netzknoten inkrementiert. Liegt ein lokaler Fehler vor, wird - gemäß CAN-Spezifikation - der Fehlerzähler des defekten Knotens um 8 erhöht, die der übrigen CAN-Controller um 1, so daß der fehlerhafte Controller zuerst in den passiven Fehlerzustand übergeht. Erreicht ein Fehlerzähler eines CAN-Controllers den Wert 96, sendet er einem Fehler-Interrupt an seine Kommunikations-CPU. Dieser Interrupt weist auf einen stark gestörten Busverkehr hin und deutet der CPU an, daß der CAN-Controller wahrscheinlich bald in den passiven Zustand (Fehlerzählerstand 127) übergehen wird. Nach Erhalt des Fehler-Interrupts teilt die Kommunikations-CPU dem zugehörigen Watchdog-Prozessor die Störung mit. Dieser leitet nun die Übertragung der Fehlerbenachrichtigung über sein Bussystem (jetzt Watchdogbus) ein.

Der Vorteil dieser Methode besteht darin, daß der Umschaltvorgang im Fall eines Prozeßbusfehlers ausgeführt wird während sich der CAN-Controller des fehlerhaften Knotens noch im aktiven Fehlerzustand (Fehlerzählerstand ≤ 127) befindet. Dieser Controller zerstört also die als fehlerhaft erkannte Nachricht fortlaufend bis zum Umschaltvorgang; dadurch geht bis zur Umschaltung keine Nachricht verloren, keine fehlerhafte Nachricht wird bearbeitet und keine Nachricht wird verdoppelt. Somit sind die Voraussetzungen zur Wahrung der Datenkonsistenz im Fehlerfall erfüllt. Weiterhin wird ein Knotenausfall und der Ort des Ausfalls sofort innerhalb des gesamten Systems bekannt, was in einem gewöhnlichen CAN-System nicht gegeben ist (s.o.). Fehler, die in den Komponenten zwischen Bus und Kommunikatons-CPU (Transceiver, CAN-Chip und Verbindungen) auftreten und von den CAN-Funktionen zur Fehlerkennung nicht erfaßt werden, werden nach dem erfindungsgemäßen Verfahren durch einen zusätzlichen Überwachungsmechanismus erkannt. Dieser Mechanismus ist in der Software der Kommunikations-CPU's implementiert und sieht eine zyklische Funktionsüberwachung der Komponenten vor. Bei Auftreten eines Fehlers benachrichtigt die fehlererkennende CPU wiederum den zugehörigen Watchdog-Prozessor, der die anderen Knoten durch Senden einer Fehlernachricht über den Watchdogbus darüber informiert.

Die Erkennung und Behandlung von Fehlern im Bereich der Kommunikations-CPU's ist im CAN-Protokoll nicht vorgesehen und erfordert eine zusätzliche Implementierung nach dem erfindungsgemäßen Verfahren. Im Normalbetrieb sendet jede CPU zyklisch Lebenssignale an den zugehörigen Watchdog-Prozessor. Bleiben diese Signale aus, weist dies auf einen CPU-Ausfall hin. Ist eine CPU des Prozeßbusses betroffen, leitet der Watchdog-Prozessor den Umschaltvorgang durch das Senden der Fehlermitteilung ein (s.o.). Die Zyklen der Lebenssignale sind so zu wählen, daß die Fehlererkennung und Umschaltung möglichst ohne Nachrichtenverlust erfolgt. Neben der Überwachung durch den Watchdog-Prozessor führt eine Kommunikations-CPU Selbsttests durch. Werden hierdurch Fehlfunktionen erkannt, wird der Watchdog-Prozessor benachrichtigt um die Übertragung der Fehlermitteilung einzuleiten.

Bei bestimmten Komponenten-Fehlern ist der Verlust von Nachrichten vom Auftreten der Fehlfunktion bis zum Umschaltvorgang ggf. nicht ganz auszuschließen. Diese Situation kann zum Beispiel dann eintreten, wenn die Fehlerlatenz größer als die Übertragungsdauer einer Nachricht ist. Für diese Fälle sind Recovery-Maßnahmen zu implementieren, die den konsistenten Systemzustand wiederherstellen.

Zusammenfassend gliedern sich die Kriterien, die zur Redundanzumschaltung führen wie folgt:
- Auftreten eines error passive-Interrupt eines CAN-Controllers
- Ausbleiben von Lebenssignalen einer Kommunikations-CPU
- Erkennen eines CPU-Fehlers durch die Selbsttestroutinen einer CPU
- Erkennen eines CAN-Controller-, Transceiver- oder Verbindungsfehlers durch die Überwachungsroutinen einer CPU

Die Umschaltung findet nur statt, wenn Komponenten des Prozeßbusses fehlerhaft sind. Andernfalls erfolgt nur eine Fehlerbenachrichtigung der anderen Systemteilnehmer.

## Patentansprüche

1. Verfahren zur zuverlässigen und fehlertoleranten Informationsübertragung unter hohen Echtzeitanforderungen in einem lokalen Netzwerk, wobei ein aktiver Fehlererkennungs- und Benachrichtigungs-Mechanismus auf der Basis einer Doppelbusarchitektur, also redundanter Bussysteme (Bus 1, Bus 2) verwendet wird, dadurch gekennzeichnet, daß
a) der Bus des einen Bussystems (z.B. Bus 1) im fehlerfreien Betrieb als Prozeßbus alle Prozeßdaten überträgt und der Bus des anderen Bussystems (z.B. Bus 2) im fehlerfreien Betrieb Statusinformationen seiner Komponenten und sonstige Informationen überträgt,
b) jeder Bus (Bus 1, Bus 2) im Fall eines Fehlers im anderen Bus als Watchdogbus zur Fehlerbenachrichtigung aller Netzteilnehmer, d.h. Netzknoten (1 bis n) dient, wobei
b1) die Fehlerbenachrichtigung im Fall eines Fehlers im Prozeßbus (z.B. Bus 1) eine Umschaltung aller Netzknoten (Knoten 1 bis n) auf das andere Bussystem (z.B. Bus 2) auslöst und damit die Übertragung der Prozeßdaten auf dem fehlerfreien Bus (z.B. Bus 2) weitergeführt wird, und
b2) die Fehlerbenachrichtigung im Fall eines Fehlers im Nicht-Prozeßbus (z.B. Bus 2) keine Umschaltung auslöst,
c) Netzknoten (1 bis n) verwendet werden, die alle über zwei komplette Busanschaltungen (Anschaltung 1, Anschaltung 2) - bestehend aus Kommunikations-CPU, Kommunikations-Controller und Transceiver verfügen, wobei
c1) jede Kommunikations-CPU (z.B. CPU1) als Watchdog-Prozessor zur Funktionsüberwachung der anderen Anschaltung (z.B. Anschaltung 2) seines Knotens und zur Überwachung seiner Anschaltungs-Komponenten (z.B. CAN-Controller 1, TC1) dient, und
c2) eine Kommunikations-CPU (z.B. CPU1) nach Erkennen eines Fehlers in der anderen Anschaltung (z.B. Anschaltung 2) seines Knotens das Senden einer Fehlernachricht über seinen Bus (z.B. Bus 1) einleitet.

2. Verfahren nach Anspruch 1, dadurch gekennzeichnet, daß Fehlererkennungs-Mechanismen zur Funktionsüberwachung aller Komponenten und zur Erkennung aller Fehlerarten verwendet werden, wobei
a) die beiden Kommunikations-CPU's (CPU1, CPU2) eines Netzknotens (z.B. Knoten 1) zur Erkennung eines CPU-Ausfalls gegenseitig zyklisch Lebenssignale austauschen, und
b) ein Kommunikations-Controller (z.B. CAN-Controller 1) bei Erkennen eines permanenten Übertragungsfehlers einen Fehlerinterrupt an die Kommunikations-CPU (z.B. CPU1) seiner Anschaltung (z.B. Anschaltung 1) sendet, die daraufhin die CPU (z.B. CPU2) der anderen Anschaltung (z.B. Anschaltung 2) des Knotens (z.B. Knoten 1) benachrichtigt, und
c) eine Kommunikations-CPU (CPU1, CPU2) eine zyklische Funktions überwachung der Komponenten (CAN-Controller 1,2, TC1, TC2) seiner Anschaltung (Anschaltung 1, 2) durch Ausführen von Testroutinen durchführt, und
d) eine Kommunikations-CPU (CPU1, CPU2) Selbsttestroutinen zur Erkennung eigener Fehler ausführt.

3. Verfahren nach Anspruch 1 oder 2, dadurch gekennzeichnet, daß die Umschaltung im Fall eines Prozeßbusfehlers (z.B. Bus 1) konsistent erfolgt, wobei
a) die Fehlerlatenzen zwischen Erkennen eines Fehlers und möglichem Umschalten in den meisten Fehlerfällen so kurz ist, daß kein Nachrichtenverlust auftritt, und
b) die Fehlerüberdeckung so hoch ist, daß keine Verfälschung von Nachrichten unentdeckt bleibt, und
c) Recovery-Mechanismen bei eventuellen Nachrichten-Verlusten, - Verfälschungen oder -Verdopplungen einen konsistenten Systemzustand wiederherstellen.

4. Verfahren nach einem der vorstehenden Ansprüche, dadurch gekennzeichnet, daß beide Bussysteme das Übertragungsprotokoll CAN verwenden, wobei
a) der Fehlerzähler-Mechanismus von CAN genutzt wird, wobei
a1) der fehlerhafte CAN-Controller eine als fehlerhaft erkannte Nachricht solange zerstört und somit eine fortlaufende Sendewiederholung erzwingt, bis sein Fehlerzähler den Stand 127 erreicht hat, und
a2) der beim Fehlerzählerstand 96 vom CAN-Controller an die CPU gesendete Fehlerinterrupt das Senden einer Fehlernachricht über den Watchdog-Prozessor auf den Watchdogbus einleitet, und
a3) das durch die Fehlernachricht ggf. ausgelöste Umschalten aller Netzteilnehmer auf den fehlerfreien Bus noch während der erzwungenen Sendewiederholung auf dem fehlerhaften Bus erfolgt, so daß kein Nachrichtenverlust auftritt.

## Claims

1. Method for reliable and fault-tolerant information transmission subject to severe real-time requirements in a local area network, with an active fault identification and notification mechanism based on a double-bus architecture, that is to say redundant bus systems (Bus 1, Bus 2) being used, characterized in that
a) during fault-free operation, the bus of the one bus system (for example Bus 1) transmits all the process data as a process bus and, during fault-free operation, the bus of the other bus system (for example Bus 2) transmits status information about its components and other information,
b) in the event of a fault in the other bus, each bus (Bus 1, Bus 2) is used as a watchdog bus for fault notification to all network subscribers; that is to say network nodes (1 to n) where
b1) the fault notification in the event of a fault in the process bus (for example Bus 1) causes all the network nodes (nodes 1 to n) to switch to the other bus system (for example Bus 2), and the transmission of the process data is thus continued on the fault-free bus (for example Bus 2), and
b2) the fault notification in the event of a fault in the non-process bus (for example Bus 2) does not cause any switching,
c) network nodes (1 to n) are used which all have two complete bus connections (Connection 1, Connection 2) - comprising communication CPU, communication controller and transceiver, with
c1) each communication CPU (for example CPU1) being used as a watchdog processor for functional monitoring of the other connection (for example Connection 2) of its node and for monitoring its connection components (for example CAN Controller 1, TC1), and
c2) after identification of a fault in the other connection (for example Connection 2), a communication CPU (for example CPU1) causing its node to transmit a fault message via its bus (for example Bus 1).

2. Method according to Claim 1, characterized in that fault identification mechanisms are used for functional monitoring of all the components and for identifying all fault types, where
a) the two communication CPUs (CPU1, CPU2) of a network node (for example Node 1) cyclically interchange life signals between one another in order to identify a CPU failure, and
b) on identification of a permanent transmission fault, one communication controller (for example CAN Controller 1) sends a fault interrupt for its connection (for example Connection 1) to the communication CPU (for example CPU1) which then notifies the CPU (for example CPU2) of the other connection (for example Connection 2) of the node (for example Node 1) and
c) one communication CPU (CPU1, CPU2) carries out cyclic functional monitoring of the. components (CAN Controllers 1, 2, TC1, TC2) of its connection (Connection 1, 2) by carrying out-test routines, and
d) one communication CPU (CPU1, CPU2) carries out self-test routines in order to identify its own faults.

3. The method as claimed in Claim 1 or 2, characterized in that the switching in the event of a process bus fault (for example Bus 1) is carried out consistently, with
a) the fault latency between identification of a fault and possible switching being in most cases so short that no loss of information occurs, and
b) the fault coverage being so high that no corruption of information remains concealed, and
c) recovery mechanisms in the event of any possible loss of information, information corruption or information duplication producing a consistent system state once again.

4. Method according to one of the preceding claims, characterized in that both bus systems use the transmission protocol CAN with
a) the fault counter mechanism of CAN being used, with
a1) the faulty CAN controller destroying information identified as being faulty and thus forcing transmission to be repeated continuously until its fault counter has reached the state 127, and
a2) the fault interrupt sent to the CPU by the CAN controller when the fault count is 96 causing the transmission of a fault message via the watchdog processor to the watchdog bus, and
a3) the switching of all the network subscribers to the fault-free bus which may be initiated by the fault message taking place even during the forced transmission repetition on the faulty bus, so that no information is lost.

## Revendications

1. Procédé pour transmettre des informations de manière fiable en tolérant des erreurs, dans des conditions de temps réel sévères, dans un réseau local, un mécanisme actif de détection et de correction d'erreur basé sur une architecture à bus double, c'est-à-dire à système de bus redondant (bus 1, bus 2), étant utilisé, caractérisé en ce que
a) le bus de l'un des systèmes de bus (par exemple le bus 1), en fonctionnement sans erreur, transmet toutes les données de traitement, en tant que bus de traitement, et le bus de l'autre système de bus (par exemple le bus 2), en fonctionnement sans erreur, transmet des informations d'état sur ses composants ainsi que d'autres informations,
b) chaque bus (bus 1, bus 2), dans le cas d'une erreur sur l'autre bus, sert de bus contrôleur de séquence pour la correction d'erreurs de tous les utilisateurs du réseau, c'est-à-dire de tous les noeuds du réseau (1 à n),
b1) la correction d'erreur, dans le cas d'une erreur sur le bus de traitement (par exemple le bus 1) provoquant une commutation de tous les noeuds du réseau (noeuds 1 à n) sur l'autre système de bus (par exemple le bus 2) et poursuivant ainsi la transmission des données de traitement sur le bus sans erreur (par exemple le bus 2) et,
b2) la correction d'erreur en cas d'erreur sur le bus qui n'est pas le bus de traitement (par exemple sur le bus 2) ne provoquant aucune commutation,
c) l'on utilise des noeuds de réseau (1 à n) qui disposent tous de deux circuits complets de connexion de bus (circuit 1, circuit 2) - formés d'une CPU de communication, d'un contrôleur de communication et d'un transceiver,
c1) chaque CPU de communication (par exemple la CPU1) servant de processeur de contrôle de séquence pour la surveillance du foinctionnement de l'autre circuit (par exemple du circuit 2) de son noeud et pour la surveillance des composants de son propre circuit (par exemple contrôleur de bus CAN1, TC1) et
c2) une CPU de communication (par exemple la CPU1) après détection d'une erreur dans l'autre circuit (par exemple dans le circuit 2) de son noeud, déclenche l'émission d'un message d'erreur sur son bus (par exemple le bus 1).

2. Procédé selon la revendication 1, caractérisé en ce qu'on utilise des mécanismes de détection d'erreur pour la surveillance du fonctionnement de tous les composants et pour la détection de tous les types d'erreurs,
a) les deux CPU de communication (CPU1, CPU2) d'un noeud de réseau (par exemple du noeud 1) échangent mutuellement, de manière cyclique, des signaux d'activité aux fins de détecter une panne de CPU,
b) un contrôleur de communication (par exemple contrôleur de CAN1) lors de la détection d'une erreur persistante de transmission, envoie une interruption d'erreur à la CPU de communication (par exemple CPU1) de son circuit (par exemple circuit 1), qui informe alors la CPU (par exemple la CPU2) de l'autre circuit (par exemple du circuit 2) du noeud (par exemple du noeud 1),
c) une CPU de communication (CPU 1, CPU2) procède, par des routines de test, à une surveillance cyclique du fonctionnement des composants (contrôleur de CAN 1, 2, TC1, TC2) de son circuit (circuit1, 2) et
d) une CPU de communication (CPU1, CPU2) exécute des routines d'autocontrôle pour détecter une erreur interne.

3. Procédé selon la revendication 1 ou 2, caractérisé en ce que la commutation, en cas d'erreur de bus de traitement (par exemple de bus 1), est effectuée de manière cohérente
a) les latences d'erreurs entre la détection d'une erreur et la commutation possible dans la majorité des cas d'erreur étant suffisamment courtes pour qu'il n'y ait pas de perte d'informations,
b) le recouvrement d'erreurs étant suffisamment élevé pour qu'aucune altération d'information ne reste sans être décelée,
c) des mécanismes de récupération, dans l'éventualité de pertes d'informations, d'altérations ou de duplications, restaurant un état de système cohérent.

4. Procédé selon une des revendications précédentes, caractérisé en ce que les deux systèmes de bus utilisent le protocole de transmission CAN
a) le mécanisme de comptage d'erreur de CAn étant utilisé,
a1) le contrôleur CAN défectueux détruisant une information reconnue altérée et forçant une répétition continue de l'émission tant que son compteur n'a pas atteint l'état 127,
a2) l'interruption d'erreur envoyée par le contrôleur CAN à la CPU pour l'état de compteur 96 déclenche l'envoi par le processeur de contrôleur de séquence d'un message d'erreur sur le bus de contrôleur de séquence et
a3) la commutation de tous les utilisateurs du réseau sur le bus sans erreur, événetuellement déclenchée par le message d'erreur, ayant lieu pendant la répétition forcée de l'émission sur le bus défectueux de sorte qu'il n'y pas de perte d'information.
